# EUROPEAN PATENT APPLICATION

(11) **EP 3 901 036 A1**
(43) Date of publication of application: **27.10.2021**
(21) Application number: 21169655.4
(22) Date of filing: 21.04.2021
(51) Int. Cl.: B64D 11/00, B64D 11/06

(54) **AIRCRAFT SEAT BOTTOM CUSHION ASSEMBLY WITH POWER PROVIDING DEVICE**

(30) Priority: 21.04.2020 US 202063013260 P; 16.03.2021 US 202117202477
(71) Applicant: B/E Aerospace, Inc., Winston-Salem, NC 27105 (US)
(72) Inventor: D'ALESSIO, Bradford, Winston-Salem, 27103 (US); SUHRE, Ryan J., Winston-Salem, 27106 (US); PUGLISI, Stephen A., Greensboro, 27410 (US)
(74) Representative: Dehns

(57) **Abstract**

A system may include an aircraft seat bottom cushion assembly (102) having a front portion (114) and two side portions (116). The aircraft seat bottom cushion assembly may include a power providing device positioned at the front portion or one of the two side portions of the aircraft seat bottom cushion assembly (102). The aircraft seat bottom cushion assembly may further include electrical wiring extending through the aircraft seat bottom cushion assembly to the power providing device. The electrical wiring electrically may be coupled to the power providing device.

## Description

### CROSS-REFERENCE TO RELATED APPLICATIONS

**The** present application is related to and claims priority from: United States Application Serial Number 63/013,260, titled AIRCRAFT SEAT BOTTOM CUSHION ASSEMBLY WITH POWER PROVIDING DEVICE, filed April 21, 2020. United States Application Serial Number 63/013,260 is herein incorporated by reference in its entirety.

### BACKGROUND

Currently, options for powering and charging mobile computing devices near aircraft passenger seats are limited. Current options are often located in difficult to access locations, take up valuable passenger space, are not easily visible to passengers, and often require challenging wiring schemes.

### SUMMARY

In one aspect, embodiments of the inventive concepts disclosed herein are directed to a system. The system may include an aircraft seat bottom cushion assembly having a front portion and two side portions. The aircraft seat bottom cushion assembly may include a power providing device positioned at the front portion or one of the two side portions of the aircraft seat bottom cushion assembly. The aircraft seat bottom cushion assembly may further include electrical wiring extending through the aircraft seat bottom cushion assembly to the power providing device. The electrical wiring electrically may be coupled to the power providing device.

### BRIEF DESCRIPTION OF THE DRAWINGS

Implementations of the inventive concepts disclosed herein may be better understood when consideration is given to the following detailed description thereof. Such description makes reference to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 is a perspective view of an exemplary embodiment of a system including an aircraft seat bottom cushion assembly according to the inventive concepts disclosed herein.
FIG. 2 is a partially transparent perspective view of the system of FIG. 1 according to the inventive concepts disclosed herein.
FIG. 3 is a cross-sectional perspective view of the system of FIG. 1 according to the inventive concepts disclosed herein.
FIG. 4 is a cross-sectional view of the system of FIG. 1 according to the inventive concepts disclosed herein.
FIG. 5 is a perspective view of an exemplary embodiment of a system including an aircraft seat bottom cushion assembly according to the inventive concepts disclosed herein.
FIG. 6 is a cross-sectional perspective view of the system of FIG. 5 according to the inventive concepts disclosed herein.
FIG. 7 is a perspective view of an exemplary embodiment of a system including an aircraft seat bottom cushion assembly according to the inventive concepts disclosed herein.
FIG. 8 is a perspective view of seat cushion material of the system of FIG. 7 according to the inventive concepts disclosed herein.
FIG. 9 is a transparent perspective view of seat cushion material of the system of FIG. 7 according to the inventive concepts disclosed herein.
FIG. 10 is a transparent bottom view of seat cushion material of the system of FIG. 7 according to the inventive concepts disclosed herein.
FIG. 11 is a perspective view of an exemplary embodiment of a system including an aircraft seat bottom cushion assembly according to the inventive concepts disclosed herein.
FIG. 12 is a partially transparent perspective view of the system of FIG. 11 according to the inventive concepts disclosed herein.
FIG. 13 is a cross-sectional perspective view of the system of FIG. 11 according to the inventive concepts disclosed herein.
FIG. 14 is a cross-sectional view of the system of FIG. 11 according to the inventive concepts disclosed herein.
FIG. 15 is a perspective view of an exemplary embodiment of a system including an aircraft seat bottom cushion assembly according to the inventive concepts disclosed herein.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

Broadly, embodiments of the inventive concepts disclosed herein are directed to a system including an aircraft seat bottom cushion assembly including a power providing device (e.g., which may include a power outlet, a universal serial bus (USB) port, and/or a wireless charger).

In some embodiments, in-seat power (ISP) may be provided on aircraft seating to support a need for power and/or charging personal electronic devices onboard an aircraft.

In some embodiments, integrating a power providing device(s) into a seat cushion can use typically unutilized space, may not reduce passenger space, and can be very visible and noticeable to a passenger as the passenger enters the seating area.

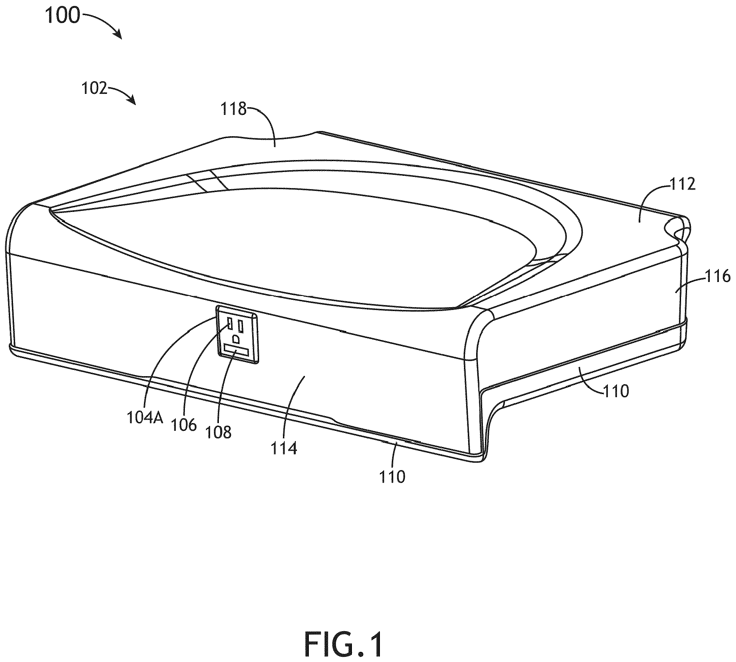

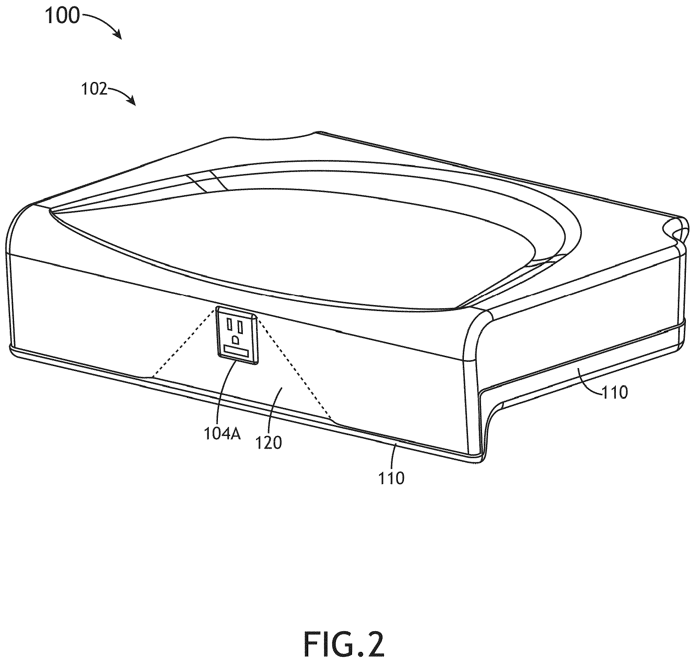

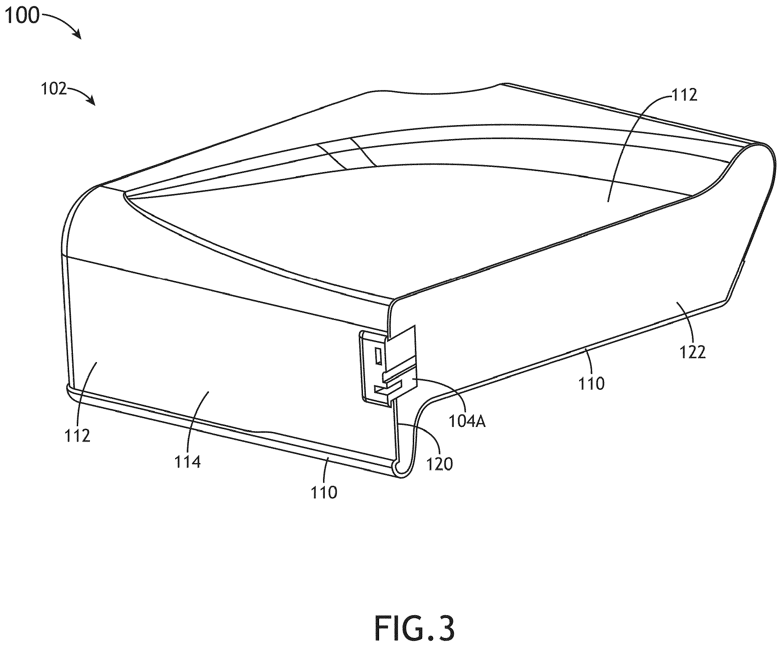

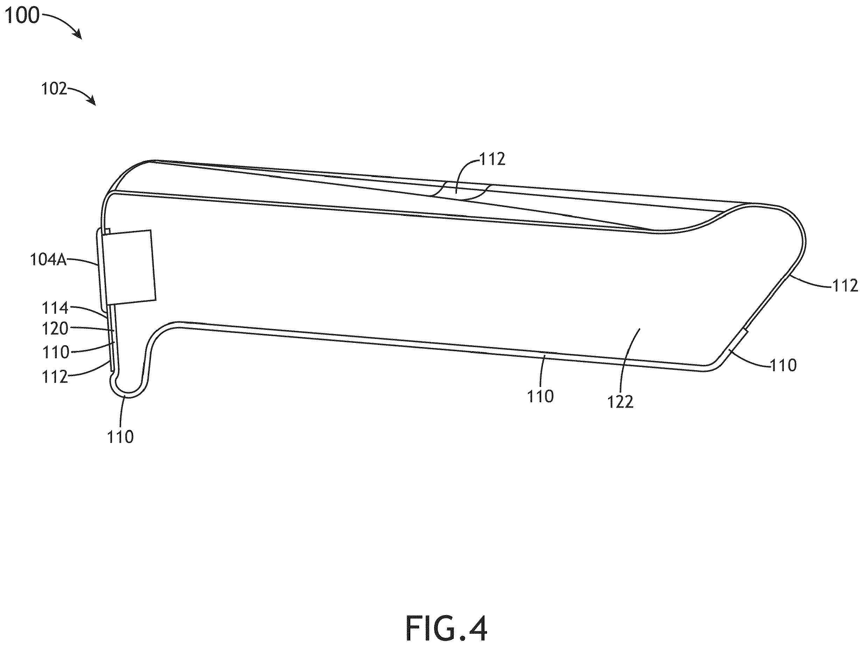

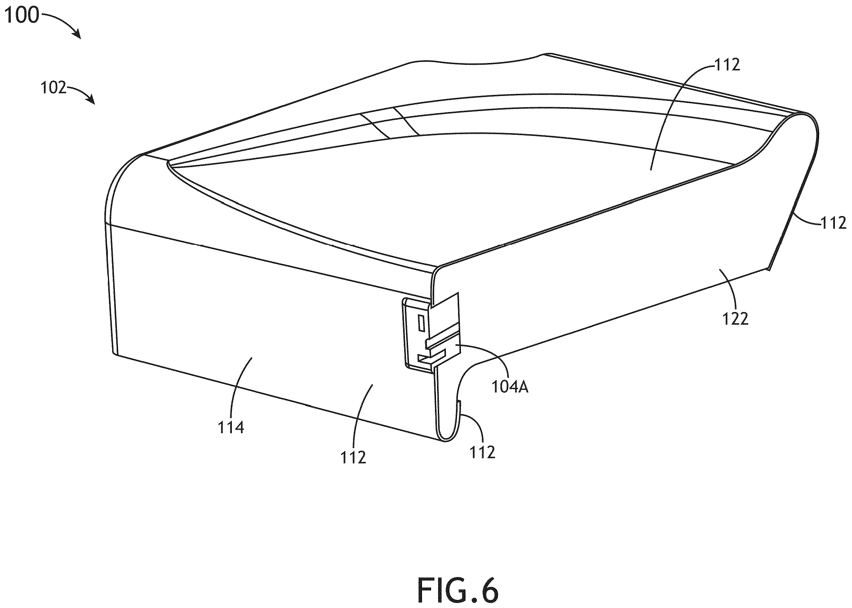

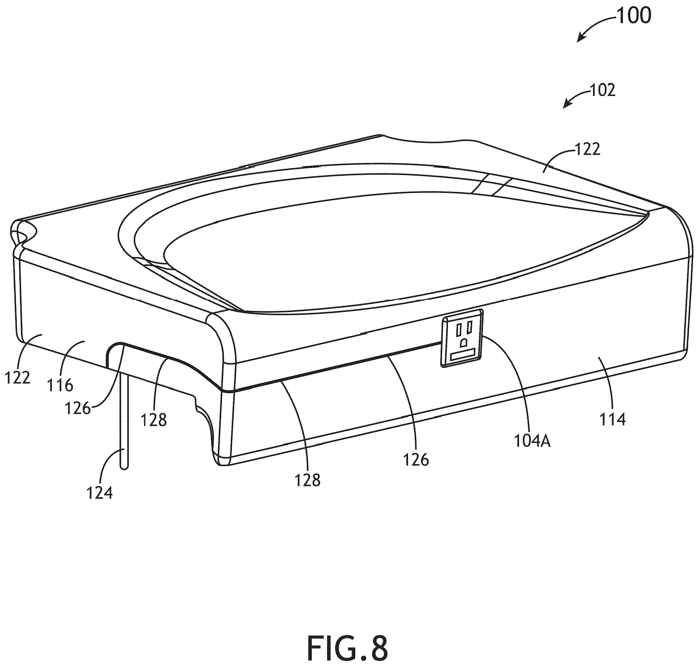

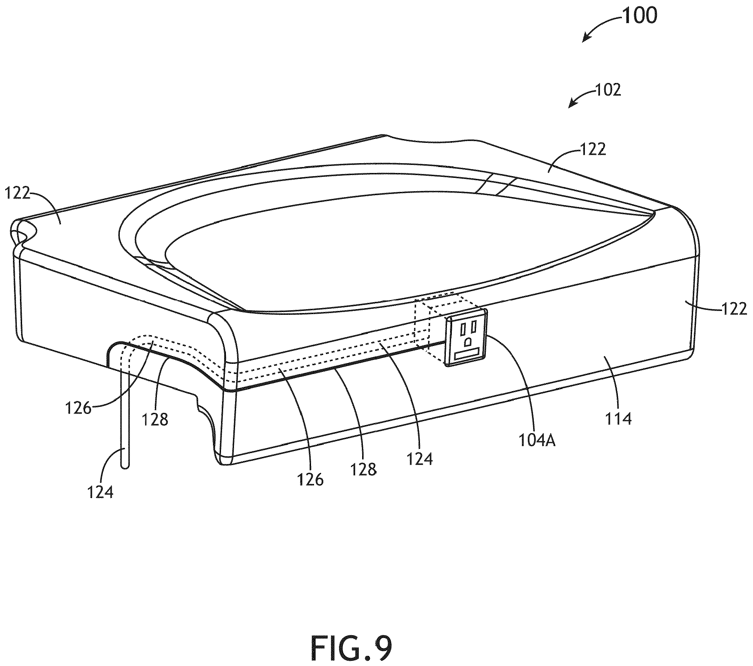

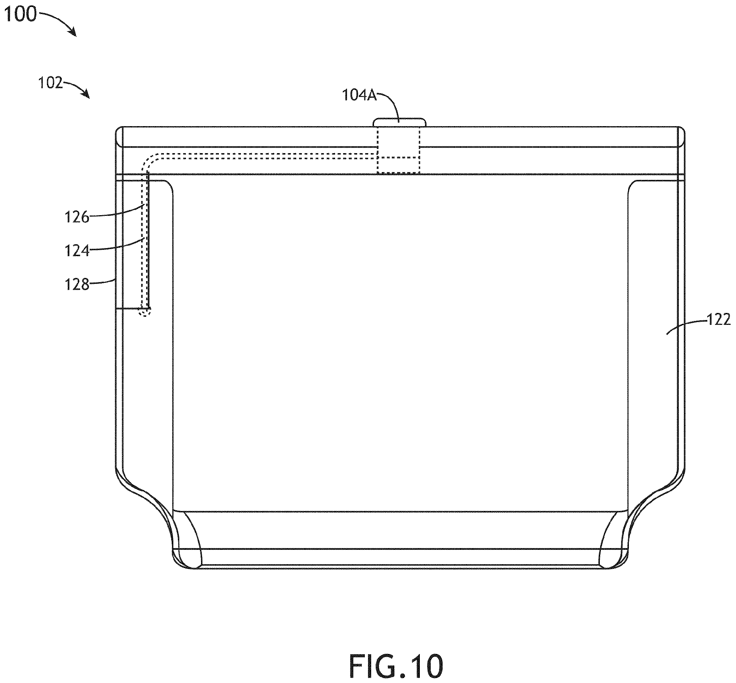

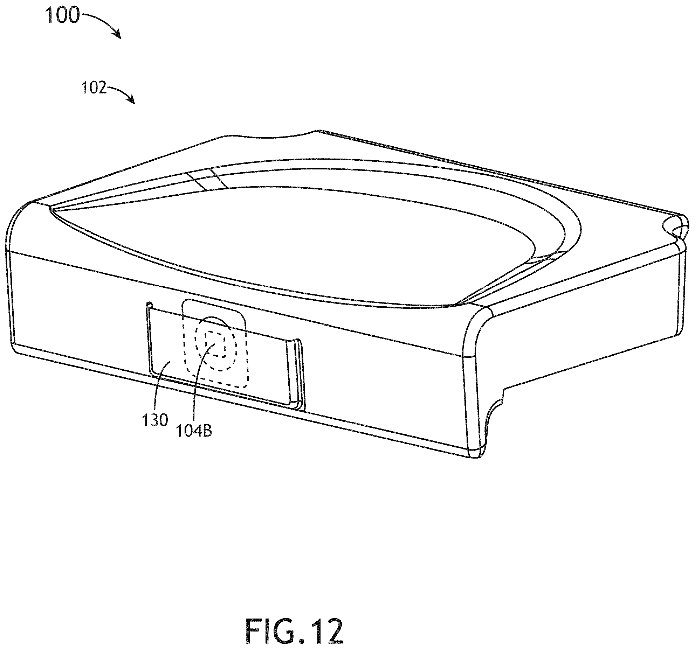

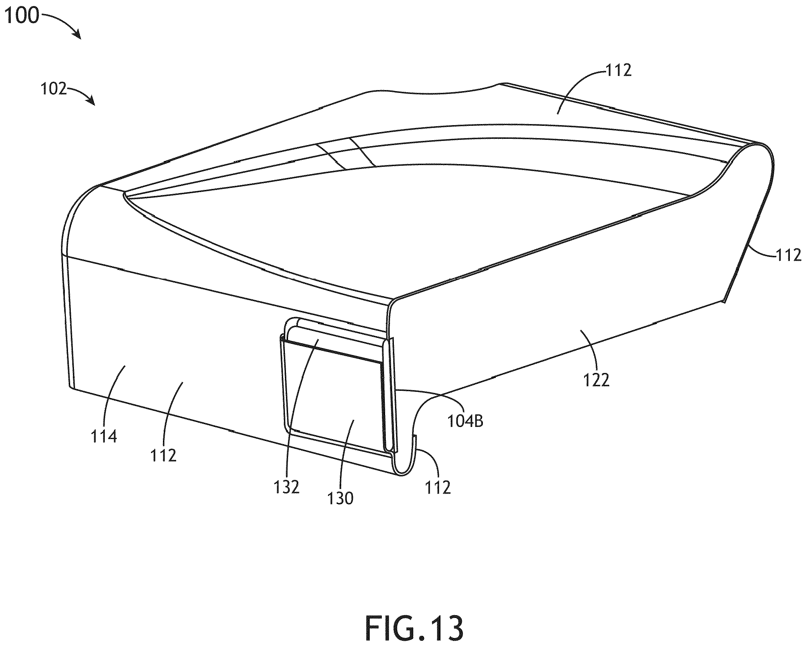

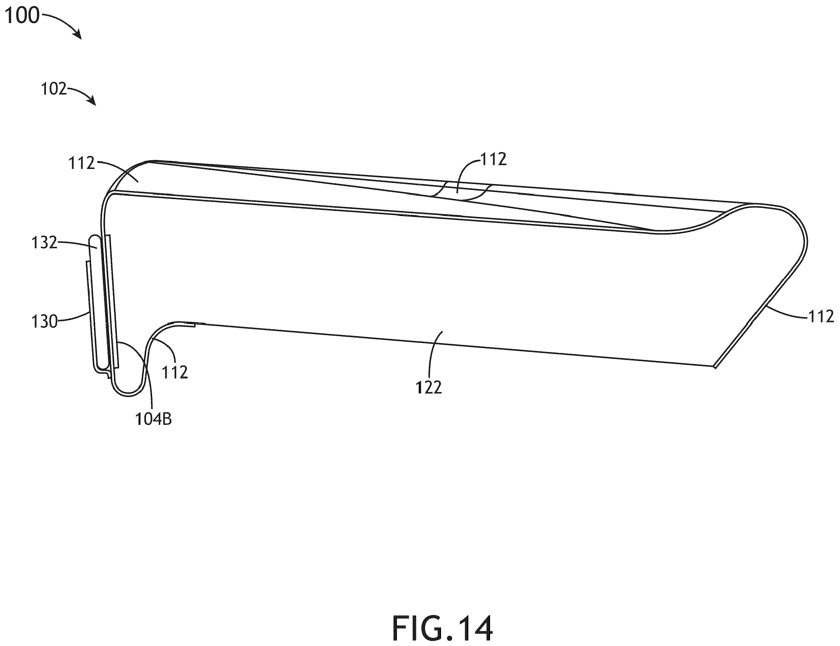

Referring now to FIGS. 1-15, exemplary embodiments of a system 100 (e.g., an aircraft, an aircraft seat, or multiple-seat aircraft seat assembly) including at least one aircraft seat bottom cushion assembly 102 are depicted according to the inventive concepts. For example, the aircraft seat bottom cushion assembly 102 may be part of an aircraft seat or a multiple-seat aircraft seat assembly, which may include other portions of the aircraft seat or the multiple-seat aircraft seat assembly. For example, the aircraft seat bottom cushion assembly 102 may be an aircraft passenger seat bottom cushion assembly. The aircraft seat bottom cushion assembly 102 may include at least one power providing device (e.g., 104A and/or 104B).

Referring now to FIGS. 1-4, in an exemplary embodiment, the aircraft seat bottom cushion assembly 102 may include a power providing device 104A, a support pan 110, cover material 112, a front portion 114, two side portions 116, a top portion 118, and/or seat cushion material 122.

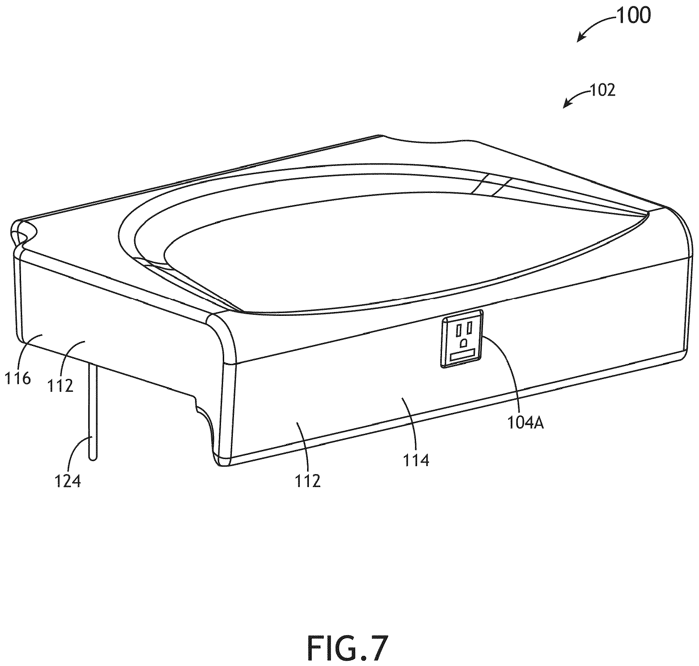

The power providing device 104A may include a power outlet 106 and/or a USB port 108. As shown in FIGS. 1-4, the power providing device 104A may be positioned at the front portion 114 of the aircraft seat bottom cushion assembly 102 and may be centrally positioned between front portions of the two side portions 116. The power providing device 104A may receive power via and be electrically coupled to electrical wiring 124 (e.g., such as shown in FIGS. 7-10).

The support pan 110 may be positioned at the bottom of the aircraft seat bottom cushion assembly 102. The support pan 110 may extend from the front portion 114 of the aircraft seat bottom cushion assembly 102 to a rear portion of the aircraft seat bottom cushion assembly 102. The support pan 110 may extend from one side portion 116 of the aircraft seat bottom cushion assembly 102 to the other side portion 116. At least some of the support pan 110 may be located under the seat cushion material 122. The support pan 110 may include a mostly vertical (e.g., more vertical than horizontal and/or fully vertical) portion 120 at the front portion 114 of the aircraft seat bottom cushion assembly 102. The power providing device 104A may be mounted to the mostly vertical portion 120 of the support pan 110. In some embodiments, the power providing device 104A may extend through a hole in the mostly vertical portion 120. In some embodiments, the mostly vertical portion 120 may taper as the mostly vertical portion 120 extends from the bottom of the aircraft seat bottom cushion assembly 102 toward the top portion 118, for example, such that a top part of the mostly vertical portion 120 may be between locations where a passenger's legs typically would rest on. In some embodiments, the support pan 110 may be composed of plastic and/or metal.

The cover material 112 may cover portions (e.g., a top surface, at least part of side surfaces, at least part of a front surface, and/or at least part of a rear surface) of the seat cushion material 122. Additionally, the cover material 112 may cover other portions of the aircraft seat bottom cushion assembly 102, such as at least part of the mostly vertical portion 120 of the support pan 110. The cover material 112 may include any suitable cover material. In some embodiments, the cover material 112 may include leather (e.g., natural and/or synthetic leather), vinyl, fabric, or some combination thereof.

The seat cushion material 122 may be formed of any suitable material, such as foam. The seat cushion material 122 may be positioned above a part of the support pan 110. The seat cushion material 122 may include a recess at the front portion 114 shaped to receive a portion of the power providing device 104A. In some embodiments, the seat cushion material 122 may have a channel for routing electrical wiring 124 through the aircraft seat bottom cushion assembly 102 from a power source to the power providing device 104A, as exemplarily shown in FIGS. 7-10. The seat cushion material 122 may have a shape and features formed by any suitable process(es); for example, the seat cushion material 122 and features thereof may be formed through a three-dimensional printing process. In some embodiments, the electrical wiring 124 may be routed between the seat cushion material 122 and the cover material 112.

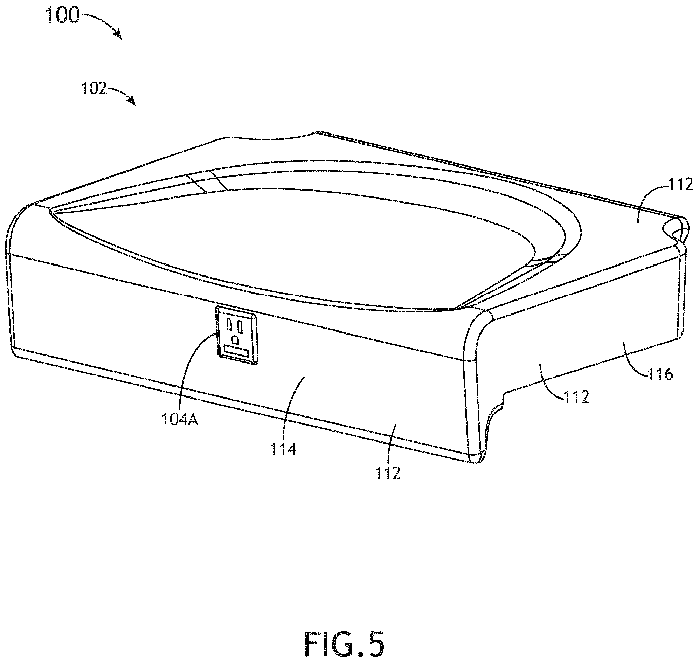

Referring now to FIGS. 5-6, in an exemplary embodiment, the aircraft seat bottom cushion assembly 102 may be implemented similarly and function similarly to the aircraft seat bottom cushion assembly 102 shown in and described with respect to FIGS. 1-4, except that the aircraft seat bottom cushion assembly 102 may omit the support pan 110. For example, the power providing device 104A may be mounted within a recess of the seat cushion material 122.

Referring now to FIGS. 7-10, in an exemplary embodiment, the aircraft seat bottom cushion assembly 102 may be implemented similarly and function similarly to the aircraft seat bottom cushion assembly 102 shown in and described with respect to FIGS. 5-6.

The seat cushion material 122 may include a channel 126 formed of a channel slit 128, channel groove, and/or a channel hollow passageway. The electrical wiring 124 may pass through the channel 126 from a power source to the power providing device 104A. For example, the channel 126 may be extend from a bottom central portion of one of the side portions 116, along said side portion 116 toward the front portion 114, transition from said side portion 116 to the front portion 114, and along the front portion 114 to a recess in the front portion 114, where the power providing device 104A is installed. In some embodiments, the channel 126 pass through any suitable portion(s) of the seat cushion material 122 and may have any suitable route(s).

In some embodiments, at least some of the electrical wiring 124 may be positioned between the cover material 112 and internal portions of the seat cushion material 122.

The electrical wiring 124 and channel 126 shown in and described with respect to FIGS. 7-10 may be similarly applied to the embodiments shown in and described with respect to FIGS. 1-4, 5-6, 11-14, and 15, as would be understood by those skilled in the art.

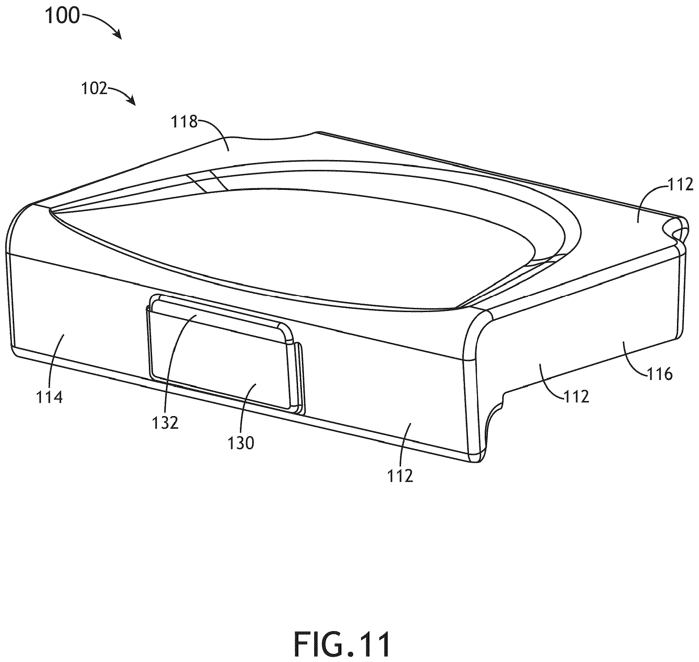

Referring now to FIGS. 11-14, in an exemplary embodiment, the aircraft seat bottom cushion assembly 102 may be implemented similarly and function similarly to the aircraft seat bottom cushion assembly 102 shown in and described with respect to FIGS. 5-6, except that the aircraft seat bottom cushion assembly 102 may omit the power providing device 104A and include the power providing device 104B and a pocket 130.

The power providing device 104B may include and/or be a wireless charger (e.g., which may include a wireless charger coil). As shown in FIGS. 11-14, the power providing device 104B may be positioned at the front portion 114 of the aircraft seat bottom cushion assembly 102 and may be centrally positioned between front portions of the two side portions 116. In some embodiments, the power providing device 104B may be installed between the cover material 112 and the seat cushion material 122. The power providing device 104B may receive power via and be electrically coupled to electrical wiring 124 (e.g., such as described with respect to and shown in FIGS. 7-10).

The aircraft seat bottom cushion assembly 102 may include the pocket 130, which may be positioned in proximity to (e.g., over) the power providing device 104B. The pocket 130 may be shaped and sized to hold a mobile computing device 132 (e.g., a mobile phone).

In some embodiments, the power providing device 104B may be mounted to a mostly vertical portion 120 of a seat pan 110, similar to the embodiment described with respect to and shown in FIGS. 1-4.

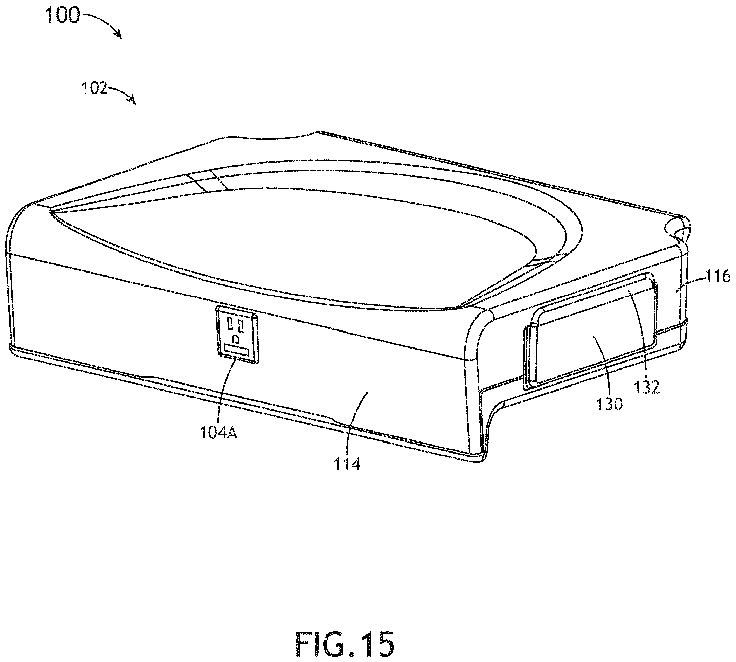

Referring now to FIG. 15, in an exemplary embodiment, the aircraft seat bottom cushion assembly 102 may be implemented similarly and function similarly to the aircraft seat bottom cushion assembly 102 shown in and described with respect to FIGS. 1-4, 5-6, and/or 7-10, except that the aircraft seat bottom cushion assembly 102 may also include the power providing device 104B and the pocket 130 (as shown in and described with respect to FIGS. 11-14) installed at one of the side portions 116 of the aircraft seat bottom cushion assembly 102. The electrical wiring 124 may be routed from a power source to both power providing devices 104A, 104B via any suitable route.

In some embodiments, the power providing devices 104A, 104B may both be installed on the front portion 114 of the aircraft seat bottom cushion assembly 102.

Some embodiments may include any suitable number of power providing devices 104A and/or any suitable number of power providing devices 104B, each installed at any suitable location of the aircraft seat bottom cushion assembly 102.

As will be appreciated from the above, embodiments of the inventive concepts disclosed herein may be directed to a system including an aircraft seat bottom cushion assembly including a power providing device(s).

As used throughout, "at least one" means one or a plurality of; for example, "at least one" may comprise one, two, three, ..., one hundred, or more. Similarly, as used throughout, "one or more" means one or a plurality of; for example, "one or more" may comprise one, two, three, ..., one hundred, or more. Further, as used throughout, "zero or more" means zero, one, or a plurality of; for example, "zero or more" may comprise zero, one, two, three, ..., one hundred, or more.

In the present disclosure, the methods, operations, and/or functionality disclosed may be implemented as sets of instructions or software readable by a device. Further, it is understood that the specific order or hierarchy of steps in the methods, operations, and/or functionality disclosed are examples of exemplary approaches. Based upon design preferences, it is understood that the specific order or hierarchy of steps in the methods, operations, and/or functionality can be rearranged while remaining within the scope of the inventive concepts disclosed herein. The accompanying claims may present elements of the various steps in a sample order, and are not necessarily meant to be limited to the specific order or hierarchy presented.

It is to be understood that embodiments of the methods according to the inventive concepts disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

From the above description, it is clear that the inventive concepts disclosed herein are well adapted to carry out the objects and to attain the advantages mentioned herein as well as those inherent in the inventive concepts disclosed herein. While presently preferred embodiments of the inventive concepts disclosed herein have been described for purposes of this disclosure, it will be understood that numerous changes may be made which will readily suggest themselves to those skilled in the art and which are accomplished within the broad scope and coverage of the inventive concepts disclosed and claimed herein.

## Claims

1. A system, comprising:
an aircraft seat bottom cushion assembly (102) having a front portion (114) and two side portions (116), comprising:
a power providing device positioned at the front portion or one of the two side portions of the aircraft seat bottom cushion assembly (102); and
electrical wiring (124) extending through the aircraft seat bottom cushion assembly (102) to the power providing device, the electrical wiring electrically coupled to the power providing device.

2. The system of claim 1, wherein the power providing device includes an electrical power outlet positioned at the front portion of the aircraft seat bottom cushion assembly.

3. The system of claim 1, wherein the power providing device includes a universal serial bus (USB) port positioned at the front portion of the aircraft seat bottom cushion assembly.

4. The system of claim 1, wherein the power providing device is a wireless charger.

5. The system of claim 4, wherein the aircraft seat bottom cushion assembly further comprises a pocket positioned in proximity to the wireless charger.

6. The system of claim 1, wherein the aircraft seat bottom cushion assembly further comprises a second power providing device, wherein the power providing device is positioned at the front portion of the aircraft seat bottom cushion assembly and includes at least one of an electrical power outlet or a universal serial bus (USB) port, wherein the second power providing device is a wireless charger, wherein the aircraft seat bottom cushion assembly further comprises a pocket positioned in proximity to the wireless charger.

7. The system of claim 1, wherein the power providing device is positioned at the front portion of the aircraft seat bottom cushion assembly and centrally positioned between front portions of the two side portions.

8. The system of claim 1, wherein the aircraft seat bottom cushion assembly further comprises seat cushion material.

9. The system of claim 8, wherein the aircraft seat bottom cushion assembly further comprises a support pan, wherein at least some of the support pan is located under the seat cushion material.

10. The system of claim 9, wherein the support pan includes a mostly vertical portion at the front portion of the aircraft seat bottom cushion assembly.

11. The system of claim 10, wherein the power providing device is mounted to the mostly vertical portion of the support pan.

12. The system of claim 8, wherein the aircraft seat bottom cushion assembly further comprises a channel extending through the seat cushion material, wherein the electrical wiring passes through the channel.

13. The system of claim 8, wherein the aircraft seat bottom cushion assembly further comprises cover material at least covering portions of the seat cushion material.

14. The system of claim 13, wherein at least some of the electrical wiring is positioned between the cover material and internal portions of the seat cushion material.

15. The system of claim 1, wherein the aircraft seat bottom cushion assembly is an aircraft passenger seat bottom cushion assembly.
